# DEMANDE DE BREVET EUROPEEN

(11) **EP 0 995 590 A1**
(43) Date de publication de la demande: **26.04.2000**
(21) Numéro de dépôt: 99402380.2
(22) Date de dépôt: 29.09.1999
(51) Int. Cl.: B32B 27/08, B32B 7/12, B65D 65/40

(54) **Structure multicouche comprenant au moins une couche à base de polyester et une couche de liant à fonction epoxyde**

(30) Priorité: 22.10.1998 FR 9813248
(71) Demandeur: ELF ATOCHEM S.A., 92800 Puteaux, Hauts-de-Seine (FR)
(72) Inventeur: Le Du, Yves, 27300 Valailles (FR); Hert, Marius, 27470 Serquigny (FR); Le Roy, Christophe, 27000 Evreux (FR)
(74) Mandataire: Neel, Henry

(57) **Abrégé**

La présente invention concerne une structure multicouche comprenant au moins une couche de polyester thermoplastique et directement attachée à celle-ci une couche d'un liant à fonction epoxyde, la surface du polyester côté liant ayant été traitée pour augmenter sa polarité.

Cette structure peut comprendre aussi des couches de polyamide, de polyoléfine et d'EVOH. Ces structures sont utiles pour faire des emballages.

## Description

La présente invention concerne une structure multicouche comprenant au moins une couche à base de polyester et une couche de liant à fonction epoxyde. Les polyesters de la structure sont plus particulièrement les polyesters saturés thermoplastiques tels que le PET, le PBT ou les copolyesters. A titre d'exemple on peut citer les structures PET/ liant / polyéthylène (PE) qui peuvent se présenter sous forme de films pour faire des emballages.

Les liants utilisés habituellement pour associer un polyester avec une polyoléfine sont constitués de polyoléfines fonctionnalisées avec des groupes acide ou anhydride d'acide. A titre d'exemple on pourrait citer les copolymères d'éthylène - acide (méth)acrylique, utilisés en couchage sur film O PET (PET orienté) et les copolymères éthylène - acrylate d'alkyle modifiés à l'anhydride maléique, recommandés en coextrusion du PET.

Le brevet US 4 656 094 décrit des multicouches tels que PET / liant / HDPE ou PET / liant / EVOH, le liant étant un copolymère à fonctions epoxyde. L'adhésion n'est pas suffisante.

La présente invention concerne une structure multicouche comprenant au moins une couche de polyester thermoplastique et directement attachée à celle-ci une couche d'un liant à fonction epoxyde, la surface du polyester côté liant ayant été traitée pour augmenter sa polarité.

La demanderesse a trouvé que les liants fonctionnalisés avec des groupes epoxyde apportent une amélioration sensible de l'adhésion sur les polyesters pourvu qu'ils aient été traités par exemple par un traitement Corona.

Le terme polyester désigne des polymères qui sont des produits saturés de condensation de glycols et d'acides dicarboxyliques ou de leurs dérivés. De préférence ils comprennent les produits de condensation d'acides dicarboxyliques aromatiques ayant de 8 à 14 atomes de carbone et d'au moins un glycol choisi parmi le groupe constitué du neopentylglycol, du cyclohexanediméthanol et des glycols aliphatiques de formule HO(CH₂)ₙOH dans laquelle n est un entier valant de 2 à 10. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole du ou des acides carboxyliques peut être remplacé par un acide aliphatique dicarboxylique ayant de 2 à 12 atomes de carbone.

Ces polyesters sont par exemple le polyéthylène téréphtalate (PET), le poly(1,4-butyléne) téréphtalate (PBT), le 1,4-cyclohexylène diméthylène téréphtalate/isophtalate) et d'autres esters dérivés d'acides aromatiques dicarboxyliques tels que l'acide isophtalique, dibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (para oxybenzoïque), l'acide 1,3-triméthylène bis (p-oxybenzoique) et des glycols tels que l'éthylène glycol, le 1,3 triméthylène glycol, le 1,4-tétraméthylèneglycol, le 1,6-hexaméthylène glycol, le 1,3 propylène glycol, le 1,8 octaméthylèneglycol, le 1,10-decaméthylène glycol et le 1,4 cyclohexane dimethanol ou des mélanges de glycols.

Les couches de polyesters utilisées dans la présente invention peuvent se présenter sous forme de films d'épaisseur comprise entre 5 et 100 µm extrudés en filière plate et pouvant être biorientés dans des fours par étirage dans le sens de l'extrusion et étirage dans le sens perpendiculaire à l'extrusion. Ces films peuvent être imprimés préalablement à leur association avec le liant à fonction epoxyde. Ces films doivent subir des traitements pour augmenter leur polarité et ainsi augmenter l'adhésion des liants auxquels on va les associer.

Parmi les traitements qui modifient la surface des polyesters pour augmenter leur polarité on peut citer par exemple le flammage, la mise en contact avec un acide oxydant, la mise en contact avec une solution de benzophenone et simultanément une irradiation U.V, la décharge Corona et le traitement plasma. On effectue de préférence un traitement Corona, il s'agit de décharges électriques de fréquence 14 à 40 kHz dans un champ de 10 à 20 kv entre deux électrodes. Ces traitements sont décrits dans ULLMANN'S ENCYCLOPEDIA OF INDUSTRIAL CHEMISTRY - 5^{e} édition 1991 - vol. A18 p. 491.

Les polyesters utilisés dans la présente invention sont plus particulièrement le PET, le PBT et le PETG qui est un copolyester à motifs acide téréphtalique, éthylène glycol et un second diol, de préférence le 1,4 cyclohexane dimethanol. Alors que la température de fusion du PET est de l'ordre de 250 à 260°C, celle du PETG est de l'ordre de 200 à 220°C.

Le MFI (indice de fluidité à l'état fondu) de ces polyesters, mesuré à 250°C sous 2,16 kg peut varier de 2 à 100 et avantageusement de 10 à 80.

Le liant à fonction epoxyde est un polymère thermoplastique portant des fonctions epoxyde. Il suffit qu'il puisse être par exemple coextrudé à travers une filière plate pour enduire des films de polyester. On peut utiliser indifféremment le terme d'enduction ou de couchage. Le film de polyester est traité, par exemple par décharge Corona, avant l'enduction (ou le couchage) par le liant.

Le traitement du film de polyester pour augmenter sa polarité s'effectue de préférence juste avant le couchage du liant c'est-à-dire sur la machine avec laquelle on fait le couchage du liant sur le polyester.

Le MFI (indice de fluidité à l'état fondu) peut être par exemple entre 0,1 et 50 (g/10 mn à 190°C sous 2,16 kg).

A titre d'exemple de liant à fonction epoxyde on peut citer ceux contenant de l'éthylène et un epoxyde insaturé.

Le liant de l'invention est soit un copolymère de l'éthylène et d'un epoxyde insaturé soit une polyoléfine greffée par un epoxyde insaturé.

L'adhésion entre la couche de liant et la couche de polyester augmente avec la teneur en epoxyde. Cette quantité peut être jusqu'à 15 % et avantageusement de 1 à 10 % en poids du liant.

S'agissant de la polyolefine greffée par un epoxyde insaturé on entend par polyolefine les polymères comprenant des motifs oléfines tels que par exemple des motifs éthylène, propylène, butène-1, ou tout autre alpha oléfine. A titre d'exemple, on peut citer
- les polyéthylènes tels que les LDPE, HDPE, LLDPE ou VLDPE obtenus par catalyse ionique de type Ziegler-Natta ou métallocène, par exemple, le polypropylène, les copolymères éthylène / propylène, les EPR (éthylène / propylène Rubber) ou encore les PE métallocènes (copolymères obtenus par catalyse monosite),
- les copolymères blocs styrène / éthylène-butène / styrène (SEBS), les copolymères blocs styrène / butadiène / styrène (SBS), les copolymères blocs styrène / isoprène / styrène (SIS), les copolymères blocs styrène / éthylène-propylène / styrène, les éthylène / propylène / diène (EPDM) ;
- les copolymères de l'éthylène avec au moins un produit choisi parmi les sels ou les esters d'acides carboxyliques insaturés, ou les esters vinyliques d'acides carboxyliques saturés.

Avantageusement, la polyoléfine est choisie parmi le LLDPE, le VLDPE, le polypropylène, les copolymères éthylène / acétate de vinyle ou les copolymères éthylène / (méth)acrylate d'alkyle. La densité peut être avantageusement comprise entre 0,86 et 0,965, l'indice de fluidité (MFI) peut être compris entre 0,3 et 40 (en g/10 mn à 190°C sous 2,16 kg) .

S'agissant des copolymères de l'éthylène et d'un epoxyde insaturé on peut citer par exemple les copolymères de l'éthylène d'un (meth)acrylate d'alkyle et d'un epoxyde insaturé ou les copolymères de l'éthylène, d'un ester vinylique d'acide carboxylique saturé et d'un epoxyde insaturé. La quantité d'epoxyde peut être jusqu'à 15 % en poids du copolymère et la quantité d'éthylène d'au moins 50 % en poids. Avantageusement la quantité d'epoxyde est de 1 à 10 % en poids.

Avantageusement le liant est un copolymère de l'éthylène d'un epoxyde insaturé et éventuellement d'un (meth)acrylate d'alkyle.

De préférence le (meth)acrylate d'alkyle est tel que l'alkyle possède 2 à 10 atomes de carbone.

Des exemples d'acrylate ou methacrylate d'alkyle utilisables sont notamment le methacrylate de méthyle, l'acrylate d'éthyle, l'acrylate de n-butyle, l'acrylate d'isobutyle, l'acrylate de 2-éthylhexyle. Des exemples d'epoxydes insaturés utilisables sont notamment :
- les esters et éthers de glycidyle aliphatiques tels que l'allylglycidyléther, le vinylglycidyléther, le maléate et l'itaconate de glycidyle, l'acrylate et le methacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, 5-norbornène-2-méthyl-2-glycidyl carboxylate et endocis-bicyclo(2,2,1)-5-heptène-2,3-diglycidyl dicarboxylate.

Le liant à fonction epoxyde peut aussi être dilué dans un autre polymère, il suffit que ce mélange ait les mêmes propriétés. A titre d'exemple de diluant on peut citer les polyoléfines déjà citées plus haut. La dilution permet d'ajuster la quantité de fonctions epoxydes. La quantité de diluant dépend bien sûr de la teneur en epoxyde du copolymère ou du produit greffé qu'on dilue.

Un liant avantageux est celui comprenant un copolymère de l'éthylène d'un (méth)acrylate d'alkyle et du méthacrylate de glycidyle dilué dans un produit choisi parmi les copolymères éthylène - (méth)acrylate d'alkyle, les EPR, les copolymères éthylène alpha oléfine tels que les LLDPE obtenus par catalyse Ziegler-Natta ou métallocène.

La quantité de diluant peut être de 10 à 90 parties en poids pour 90 à 10 parties du copolymère ou du polymère greffé à fonction epoxyde.

Il est bien clair que le liant de la présente invention n'est pas un adhésif du type epoxy réticulé tel que la famille des diglycidyl ether du bisphenol A et des autres résines réticulées décrites dans ULLMANN'S ENCYCLOPEDIA OF INDUSTRIAL CHEMISTRY vol. A9 p. 547-563 (1987).

L'épaisseur du polyester peut être comprise entre 5 et 100 µm, celle du liant comprise entre 3 et 50 µm.

La présente invention concerne aussi une structure multicouche comprenant successivement au moins une couche de polyester thermoplastique, une couche d'un liant à fonction epoxyde, une couche (B) d'un matériau choisi parmi les polyoléfines, les polyamides, les copolymères de l'éthylène et de l'alcool vinylique pouvant contenir de l'acétate de vinyle (EVOH), et les polyesters thermoplastiques.

Les épaisseurs de ces structures polyester / liant / (B) peuvent être par exemple 10 à 50/3 à 50/10 à 200 (en µm).

Ces structures peuvent être fabriquées par (co)extrusion couchage du liant à fonction epoxyde sur une surface de polyester solide, de préférence un film de polyester biorienté. Le liant à fonction epoxyde est associé, par coextrusion, à une ou plusieurs autres couches de polymères choisis parmi les polyéthylène, LDPE, copolymère d'éthylène et d'a-oléfines, les polyamides et éventuellement des polymères barrière à l'oxygène tels que les copolymères d'éthylène - alcool vinylique. La surface du polyester est traitée comme décrit plus haut et de préférence par décharge Corona.

Dans les structures polyester / liant / polyoléfine, la polyoléfine peut être choisie parmi les polyoléfines citées plus haut. Des polyoléfines particulièrement utiles pour les structures de l'invention sont le polyéthylène homo ou copolymère et le polypropylène homo ou copolymère.

On ne sortirait pas du cadre de l'invention en utilisant des mélanges d'EVOH et de polyoléfine.

On entend par polyamide les produits de condensation
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylène-diamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de certains de ces monomères ce qui conduit à des copolyamides, par exemple le PA-6/12 par condensation du caprolactame et du lauryllactame.

On peut utiliser des mélanges de polyamide.

Des polyamides particulièrement utiles sont le PA-6 (polycaprolactame), le PA-6,6 (polyhexamethylene adipamide), le PA-11,le PA-12, le PA-6/12, les polyamides semi aromatiques.

On ne sortirait pas du cadre de l'invention en utilisant des alliages de polyamide et de polyoléfine ou des polyamides élastomères du type PEBA.

Les polyesters thermoplastiques ont été définis plus haut.

L'invention concerne aussi les structures précédentes comprenant du côté de (B) une autre couche d'un matériau (C) choisi parmi les polyoléfines, les polyamides ou les polyesters thermoplastiques.

Il peut être nécessaire d'insérer un liant entre les couches (B) et (C). Cette couche (C) est recommandée par exemple quand la couche (B) est sensible à l'humidité et que ses propriétés sont altérées. C'est le cas de l'EVOH.

Des structures particulièrement utiles sont : Polyester thermoplastique / liant à fonction epoxyde / EVOH ou polyamide (B) / liant / polyoléfine ou polyester thermoplastique (C)

Les épaisseurs en µm peuvent être respectivement 10 à 50/3 à 50/10 à 200/3 à 50/10 à 200.

Le liant entre (B) et (C) est tout produit permettant d'obtenir une adhésion suffisante. On peut utiliser un liant à fonction epoxyde défini plus haut ou des polymères portant des fonctions acide carboxylique, anhydride d'acide carboxylique ou des dérivés de ces acides ou anhydrides.

De tels liants sont décrits dans les brevets EP 802207, EP 816460, EP 816067, EP 837080 et EP 742236 dont le contenu est incorporé dans la présente demande.

### Exemple comparatif 1 (liant à fonction anhydride maléique)

Une opération de coextrusion - couchage est réalisée sur un film solide de PET orienté (O PET), non traité, d'une épaisseur de 12 microns. L'installation utilisée est une machine ERWEPA équipée d'une filière multicouche de largeur réglée à 1300 mm, de rouleaux refroidisseurs, d'un rouleau presseur et d'une installation de traitement Corona du film solide. Cette installation est réglée à une puissance de 10 kw.

Le liant de l'exemple comparatif 1 est un copolymère éthylène - acrylate de méthyle de composition pondérale 72 / 28, greffé avec 0,3 % d'anhydride maléique.

La structure appliquée à l'O PET est constituée d'une couche de liant associé à une couche de LDPE de densité 0.920, de MFI (mesuré à 190°C sous une charge de 2,16 kg selon ASTM D 1238) égal à 3 dg/min.

L'opération de couchage est réalisée à une vitesse de ligne approximative de 100 m/min. Cette vitesse et les débits des extrudeuses de l'adhésif et du LDPE sont réglés pour obtenir des épaisseurs de couches de 8 µm de liant et 15 µm de LDPE. La température de la matière, dans la tête de coextrusion est réglée à 280° ± 5°C.

L'adhésion entre le film d'O PET et les couches de polyoléfines est caractérisée par une force de pelage mesurée sur des bandes de films de 15 mm, découpées dans le sens d'extrusion et prélevées respectivement au milieu et à 25 % des bords. La force de pelage est déterminée à l'aide d'un dynamomètre, à une vitesse de traction de 200 mm/min. C'est la valeur moyenne obtenue avec les trois prélèvements.

Dans les conditions de l'exemple comparatif 1 la force de pelage est :

| | |
|---|---|
| après extrusion | 1,2 N/15 mm |
| 2 jours après extrusion | 1,9 N/15 mm. |

En l'absence de traitement Corona les valeurs sont de 0,5 N/15 mm.

### Exemple 1

Une opération de coextrusion - couchage est réalisée dans les mêmes conditions expérimentales que celles décrites dans l'exemple comparatif 1.

Le liant est constitué d'un terpolymère éthylène - acrylate de méthyle - méthacrylate de glycidyle de composition pondérale 70 / 22 / 8 et de MFI égal à 6 dg/min. (190°C - 2,16 kg).

Les forces de pelage obtenues sont :

| | |
|---|---|
| après extrusion | 2,4 N/15 mm |
| après 2 jours | 4,3 N/15 mm. |

En l'absence de traitement Corona les valeurs sont respectivement de 0,6 N/15 mm et 0,7 N/15 mm.

### Exemple comparatif 2

Une opération de coextrusion - couchage est réalisée dans les mêmes conditions expérimentales que celles décrites dans l'exemple comparatif 1.

Le liant est constitué d'un copolymère éthylène acide acrylique de composition pondérale 92 / 8 et de MFI égal à 7 dg/min.

Les forces de pelage obtenues sont :

| | |
|---|---|
| après extrusion | 0,08 N/15 mm |
| après 2 jours | 0,07 N/15 mm. |

En l'absence de traitement Corona les valeurs sont égales à 0.

### Exemple 2

Une opération de coextrusion - couchage est réalisée dans les conditions opératoires de l'exemple comparatif 1. Le liant est constitué d'un copolymère éthylène - méthacrylate de glycidyle de rapport de composition 92 / 8 et de MFI égal à 6 dg/min (190°C - 2,16 kg).

Les forces de pelage obtenues sont :

| | |
|---|---|
| après extrusion | 2 N/15 mm |
| après 2 jours | 3,6 N/15 mm. |

En l'absence de traitement Corona les valeurs sont égales à 0.

## Revendications

1. Structure multicouche comprenant au moins une couche de polyester thermoplastique et directement attachée à celle-ci une couche d'un liant à fonction epoxyde, la surface du polyester côté liant ayant été traitée pour augmenter sa polarité.

2. Structure de la revendication 1 dans laquelle le liant à fonction epoxyde est un copolymère de l'éthylène et d'un epoxyde insaturé ou une polyoléfine greffée par un epoxyde insaturé.

3. Structure de la revendication 2 dans laquelle le liant est un copolymère de l'éthylène d'un (méth)acrylate d'alkyle et d'un epoxyde insaturé.

4. Structure de la revendication 3 dans laquelle le liant est un copolymère de l'éthylène d'un (méth)acrylate d'alkyle, du méthacrylate de glycidyle éventuellement dilué dans un copolymère éthylène - (méth)acrylate d'alkyle.

5. Structure selon l'une quelconque des revendications précédentes dans laquelle le traitement pour augmenter la polarité est une décharge Corona.

6. Structure multicouche selon l'une des revendications 1 à 5 comprenant du côté du liant une couche (B) d'un matériau choisi parmi les polyoléfines, les polyamides, les copolymères de l'éthylène et de l'alcool vinylique et les polyesters thermoplastiques.

7. Structure selon la revendication 6 comprenant une couche (C) disposée du côté de (B) choisie parmi les polyoléfines, les polyamides ou les polyesters thermoplastiques, un liant étant éventuellement disposé entre (B) et (C).

8. Structure selon la revendication 7 comprenant successivement :
- un polyester thermoplastique
- un liant à fonction epoxyde
- de l'EVOH ou un polyamide
- un liant
- une polyoléfine ou un polyester thermoplastique.

9. Emballages comprenant des films constitués des structures des revendications 1 à 8.
